# EUROPEAN PATENT APPLICATION

(11) **EP 4 585 647 A1**
(43) Date of publication of application: **16.07.2025**
(21) Application number: 23870461.3
(22) Date of filing: 19.09.2023
(51) Int. Cl.: C08L 77/06, C08L 77/02, C08L 83/07

(54) **POLYAMIDE COMPOSITE MATERIAL, PREPARATION METHOD THEREFOR, AND USE THEREOF**

(30) Priority: 29.09.2022 CN 202211196038
(71) Applicant: ZHUHAI VANTEQUE SPECIALTY ENGINEERING PLASTICS CO., LTD., Guangdong 519050 (CN); KINGFA SCI. & TECH. CO., LTD., Guangzhou, Guangdong 510663 (CN)
(72) Inventor: YANG, Shuo, Zhuhai, Guangdong 519050 (CN); LONG, Jieming, Zhuhai, Guangdong 519050 (CN); MAI, Jiehong, Zhuhai, Guangdong 519050 (CN); JIANG, Sujun, Zhuhai, Guangdong 519050 (CN); CAO, Min, Zhuhai, Guangdong 519050 (CN); XU, Xianjun, Zhuhai, Guangdong 519050 (CN)
(74) Representative: Meyer, Thorsten
(86) International application number: PCT/CN2023/119589
(87) International publication number: WO 2024/067229

(57) **Abstract**

The present disclosure provides a polyamide composite, including the following components in parts by weight: 77.2 parts to 94.8 parts of PAXI/XT, 5 parts to 20 parts of a semi-crystalline polyamide, and 0.2 part to 0.8 part of a powder of organosilicon elastomer including a methacryloxy functional group. The semi-crystalline polyamide is at least one selected from the group consisting of PA66, PA610, PA612, PA106, PA1010, and PA1012, and the PAXI/XT is a copolymer of an aliphatic diamine X, isophthalic acid I, and terephthalic acid T. The polyamide composite has advantages such as high light transmittance, high haze (excellent light-scattering performance), and prominent chemical resistance, and is suitable for the preparation of navigation lights for plant protection drones.

## Description

### TECHNICAL FIELD

The present disclosure relates to the technical field of polymer materials, and in particular relates to a polyamide composite and a preparation method and use thereof.

### BACKGROUND

Light-diffusing materials (LDMs) are a group of materials that allow light to pass through while inducing a light diffusion effect. Through scattering and refraction, LDMs can diffuse the incident light that is originally a point light source or a line light source into a line light source or a surface light source, which greatly increases the diffusion area of light and reduces the glare caused by light concentration. Currently, the commercially-available LDMs are generally composed of a matrix material and light-diffusing particles. The matrix material includes polycarbonate (PC), polyethylene terephthalate (PET), polymethyl methacrylate (PMMA), etc. The light-diffusing particles include an organic material, an inorganic material, and an organic-inorganic composite, such as polystyrene (PS), silicon dioxide (SiO₂), titanium dioxide (TiO₂), and PMMA/SiO₂. The light-diffusing particles are incorporated into the interior or on a surface of the matrix material, such that the light-diffusing performance can be achieved through the reflection and refraction of light among the light-diffusing particles. However, in the conventional LDMs, the incorporation of a light-diffusing agent can significantly reduce the light transmittance of a material while enhancing the haze of the material.

The LDMs currently available on the market are mainly based on PC resins. However, due to the poor chemical resistance of PC, these PC-based LDMs are prone to corrosion and cracking when exposed to chemical substances. For example, the navigation lights of plant protection drones are more likely to come into contact with various chemicals such as pesticides during use, which significantly reduces the service life of PC-based LDM.

Transparent nylon resins are a class of amorphous polyamide materials. Transparent nylon offers better chemical resistance than PC, and thus is more suitable for LDMs easily exposed to chemicals than PC. However, the existing transparent nylon resins still cannot be directly used due to inadequate chemical resistance, and there have been no related patent reports on transparent nylon-based LDMs. Therefore, LDMs with improved chemical resistance are required for specific application scenarios.

### SUMMARY

An objective of the present disclosure is to provide a polyamide (PA) composite with advantages such as high transparency, excellent scattering, and prominent chemical resistance.

Another objective of the present disclosure is to provide a preparation method and use of the polyamide composite.

The present disclosure is implemented by the following technical solutions:

A polyamide composite is provided, including the following components in parts by weight: 77.2 parts to 94.8 parts of PAXI/XT, 5 parts to 20 parts of a semi-crystalline polyamide, and 0.2 part to 0.8 part of a powder of organosilicon elastomer including a methacryloxy functional group, where the semi-crystalline polyamide is at least one selected from the group consisting of PA66 (polyhexamethylene adipamide), PA610 (polyhexamethylene sebacamide), PA612 (polyhexamethylene dodecanediamide), PA106 (polydecamethylene adipamide), PA1010 (polydecamethylene sebacamide), and PA1012 (polydecamethylene dodecanediamide); and the PAXI/XT is a copolymer of an aliphatic diamine X, isophthalic acid I, and terephthalic acid T, and the aliphatic diamine X is at least one selected from the group consisting of 1,6-hexanediamine and 1,10-decanediamine.

Preferably, a diamine X of the PAXI/XT is consistent with a diamine unit of the semi-crystalline polyamide.

Specifically, the PAXI/XT is at least one selected from the group consisting of PA6I/6T (poly(hexamethylene isophthalamide-co-terephthalamide)) and PA101/10T (poly(decamethylene isophthalamide-co-terephthalamide)).

When the PAXI/XT is PA6I/6T, a molar ratio of a 6I unit to a 6T unit is 65:35 to 75:25 and preferably 69:31 to 71:29; and when the PAXI/XT is PA101/10T, a molar ratio of a 10I unit to a 10T unit is 75:25 to 85:15 and preferably 79:21 to 81:19. When a ratio of XI to XT in the PAXI/XT is not in the above ranges, the crystallinity will increase, resulting in opacity.

In order make the light transmittance not significantly reduced, an average particle size of the powder of organosilicon elastomer including the methacryloxy functional group is set to 0.1 µm to 8 µm. Preferably, the average particle size of the powder of organosilicon elastomer including the methacryloxy functional group is 0.1 µm to 3 µm.

The polyamide composite has a light transmittance of greater than 73% and a haze of greater than 65%.

According to actual needs, 0 part to 2 parts of an additive can also be added. The additive is at least one selected from the group consisting of an antioxidant, a lubricant, and an anti-ultraviolet agent.

The present disclosure also provides a preparation method of the polyamide composite, including the following steps: thoroughly mixing the components according to proportions, and conducting extrusion and granulation by a twin-screw extruder at a temperature of 200°C to 280°C and a rotational speed of 200 rpm to 400 rpm to produce the polyamide composite.

The present disclosure also provides a use of the polyamide composite in preparation of a navigation light for a plant protection drone.

The present disclosure has the following beneficial effects:

The present disclosure adopts a combination of transparent PAXI/XT and a semi-crystalline polyamide at specific contents. Preferably, when the two polyamide resins share a same diamine structure, the significant transesterification is more likely to occur during melt processing, such that a homogeneous system with a microcrystalline structure can be produced. The dense crystalline regions of the microcrystalline structure further enhance the chemical resistance of the material without significantly reducing the light transmittance. Further, the present disclosure adopts a powder of organosilicon elastomer that includes a methacryloxy functional group and has a specific particle size. Based on the dense crystalline regions of the microcrystalline structure, the powder of organosilicon elastomer can significantly improve the light-scattering performance of the polyamide composite (under the premise of high transparency, the higher the haze, the better the light-scattering performance) while causing only a minimal reduction in light transmittance.

### DETAILED DESCRIPTION

The present disclosure is described in detail below with reference to specific embodiments. The following embodiments will help those skilled in the art to further understand the present disclosure, but do not limit the present disclosure in any way. It should be noted that those of ordinary skill in the art can further make several variations and improvements without departing from the idea of the present disclosure. These all fall within the protection scope of the present disclosure.

The experimental raw materials adopted in the present disclosure were as follows:

A polymerization method for a self-made polyamide was as follows: Diamine and diacid monomers were added in a specific molar ratio to a pressure reactor, and then benzoic acid, sodium hypophosphite (a catalyst), and deionized water were added to produce a reaction system. An amount of the benzoic acid was 2.5% of a total amount of the diamine and diacid monomers, a weight of the sodium hypophosphite was 0.1% of a total weight of the fed materials other than the deionized water, and a weight of the deionized water was 30% of a total weight of the fed materials. Vacuuming was conducted, and high-purity nitrogen was introduced as a protective gas. The reaction system was heated to 220°C within 2 h under stirring, stirred at 220°C for 1 h, then heated to 230°C under stirring, and further subjected to a reaction for 2 h at a constant temperature of 230 °C and a constant pressure of 2.2 MPa, where the constant pressure was maintained by removing the produced water. After the reaction was completed, a resulting prepolymer was discharged, vacuum-dried at 80°C for 24 h, and then subjected to solid-phase polymerization under vacuum at 250°C and 50 Pa for 10 h to produce the polyamide with a corresponding structure. A relative viscosity test was conducted in accordance with ASTM D 789-2006.

Transparent polyamides:
PA61/6T-1: 6I/6T = 70/30, relative viscosity: 2.2, self-made;
PA61/6T-2: 6I/6T = 65/35, relative viscosity: 2.2, self-made;
PA6I/6T-3: 6I/6T = 75/25, relative viscosity: 2.2, self-made;
PA61/6T-4: 6I/6T = 80/20, relative viscosity: 2.1, self-made;
PA6I/6T-5: 6I/6T = 60/40, relative viscosity: 2.3, self-made;
PA101/10T-1: 101/10T = 80/20, relative viscosity: 2.2, self-made;
PA101/10T-2: 101/10T = 75/25, relative viscosity: 2.2, self-made;
PA101/10T-3: 101/10T = 85/15, relative viscosity: 2.2, self-made;
PA101/10T-4: 101/10T = 70/30, relative viscosity: 2.3, self-made;
PA101/10T-5: 101/10T = 90/10, relative viscosity: 2.2, self-made;

Semi-crystalline polyamides:
PA610: relative viscosity: 2.4, Vicnyl 2300 NC003, Kingfa Sci. & Tech. Co., Ltd.;
PA1010: relative viscosity: 2.4, Vicnyl 2100 NC003, Kingfa Sci. & Tech. Co., Ltd.;
PA66: relative viscosity: 2.7, PA66 EPR27, China Pingmei Shenma Group;
PA612: relative viscosity: 2.4, Vicnyl 2800 NC003, Kingfa Sci. & Tech. Co., Ltd.;
PA106: relative viscosity: 2.4, Vicnyl 2300 NC006, Kingfa Sci. & Tech. Co., Ltd.;
PA1012: relative viscosity: 2.4, Vicnyl 2600 NC003, Kingfa Sci. & Tech. Co., Ltd.; and
PA11: relative viscosity: 2.4, Rislan BMN G8, Arkema, France.

Organosilicon elastomer powder -1 including a methacryloxy functional group (which was abbreviated as a component E1 in the table): average particle size: 2 µm, DOWSIL 30-424, Dow Chemical Company.

Organosilicon elastomer powder -2 including a methacryloxy functional group (which was abbreviated as a component E2 in the table): average particle size: 5 µm, SL-500M(G), Samsung, South Korean.

Additional organosilicon elastomer: average particle size: 3 µm, DOWSIL EP-5518, Dow Chemical Company.

Light-scattering agent: an acrylic acid light-diffusing agent, AL-206D, Samsung, South Korea, average particle size: 10 µm.

Antioxidant: RIANOX 1098, a same antioxidant was adopted in parallel tests.

A preparation method for polyamide composites in examples and comparative examples was as follows: the components were thoroughly mixed according to proportions, and extruded and granulated by a twin-screw extruder to produce a polyamide composite, where for a screw, a temperature was set to 200°C-220°C-240°C-280°C-270°C-260°C-250°C-240°C-230°C-220°C-210°C-200°C and a rotational speed was set to 200 rpm to 400 rpm.

### Test methods:

(1) Light transmittance and haze: A polyamide composite was heated at 200°C to 280°C for melting, processed into a 2 mm-thick square plate through injection molding, and tested by a light transmittance and haze tester in accordance with the national standard GB/T 2410-2008 to obtain the light transmittance and haze data.
(2) Chemical resistance evaluation: A polyamide composite was heated at 200°C to 280°C for melting and processed into a 2 mm-thick square plate through injection molding. Then the square plate was soaked in a 99.6% ethanol solution for 5 min, taken out, and tested by a light transmittance and haze tester to obtain the light transmittance data.

**Table 1 Component contents (parts by weight) and test results for polyamide composites in the examples**

| | Example 1 | Example 2 | Example 3 | Example 4 | Example 5 |
|---|---|---|---|---|---|
| Transparent polyamide type | PA6I/6T-1 | PA6I/6T-1 | PA6I/6T-1 | PA6I/6T-1 | PA6I/6T-1 |
| Transparent polyamide content | 77.2 | 85 | 90 | 94.8 | 85 |
| Semi-crystalline polyamide type | PA610 | PA610 | PA610 | PA610 | PA610 |
| Semi-crystalline polyamide content | 20 | 15 | 10 | 5 | 15 |
| E1 | 0.8 | 0.6 | 0.4 | 0.2 | |
| E2 | | | | | 0.6 |
| Antioxidant | 0.2 | 0.2 | 0.2 | 0.2 | 0.2 |
| Light transmittance, % | 82 | 83 | 84 | 87 | 75 |
| Haze, % | 81 | 76 | 70 | 65 | 84 |
| Light transmittance after ethanol soaking, % | 80 | 80 | 78 | 82 | 69 |

According to the examples, a polyamide composite prepared within the scopes of the present disclosure has a light transmittance of 73% or more and a haze of 65% or more, and exhibits excellent chemical resistance. Specifically, the higher the content of the powder of organosilicon elastomer including the methacryloxy functional group, the higher the haze (the better the scattering performance).

According to Examples 2 and 5, a particle size of the powder of organosilicon elastomer including the methacryloxy functional group is directly related to the light transmittance and haze (scattering performance). Preferably, the powder of organosilicon elastomer including the methacryloxy functional group has an average particle size of 0.1 µm to 3 µm, which allows high transparency.

**Continued Table 1:**

| | Example 6 | Example 7 | Example 8 | Example 9 | Example 10 |
|---|---|---|---|---|---|
| Transparent polyamide type | PA6I/6T-2 | PA6I/6T-3 | PA10I/10T-1 | PA10I/10T-2 | PA10I/10T-3 |
| Transparent polyamide content | 85 | 85 | 88 | 88 | 88 |
| Semi-crystalline polyamide type | PA610 | PA610 | PA1010 | PA1010 | PA1010 |
| Semi-crystalline polyamide content | 15 | 15 | 12 | 12 | 12 |
| E1 | 0.6 | 0.6 | | | |
| E2 | | | 0.6 | 0.6 | 0.6 |
| Antioxidant | 0.2 | 0.2 | 0.2 | 0.2 | 0.2 |
| Light transmittance, % | 80 | 80 | 86 | 82 | 81 |
| Haze, % | 78 | 77 | 74 | 76 | 78 |
| Light transmittance after ethanol soaking, % | 75 | 74 | 82 | 77 | 75 |

It can be seen from Examples 2, 6, and 7 that a molar ratio of a 6I unit to a 6T unit in PA6I/6T is preferably 65:35 to 75:25, which leads to both high light transmittance and prominent chemical resistance.

According to Examples 8 to 10, a molar ratio of a 10I unit to a 10T unit in PA10I/10T is preferably 75:25 to 85:15.

**Continued Table 1:**

| | Example 11 | Example 12 | Example 13 | Example 14 | Example 15 |
|---|---|---|---|---|---|
| Transparent polyamide type | PA6I/6T-1 | PA6I/6T-1 | PA6I/6T-1 | PA6I/6T-1 | PA6I/6T-1 |
| Transparent polyamide content | 85 | 85 | 85 | 85 | 85 |
| Semi-crystalline polyamide type | PA66 | PA612 | PA106 | PA1012 | PA1010 |
| Semi-crystalline polyamide content | 15 | 15 | 15 | 15 | 15 |
| E1 | 0.6 | 0.6 | 0.6 | 0.6 | 0.6 |
| E2 | | | | | |
| Antioxidant | 0.2 | 0.2 | 0.2 | 0.2 | 0.2 |
| Light transmittance, % | 78 | 79 | 75 | 74 | 74 |
| Haze, % | 79 | 77 | 85 | 83 | 72 |
| Light transmittance after ethanol soaking, % | 74 | 76 | 69 | 67 | 70 |

It can be seen from Examples 2 and 11 to 15 that a diamine X of PAXI/XT is preferably consistent with a diamine unit of a semi-crystalline polyamide.

**Table 2 Component contents (parts by weight) and test results for polyamide composites in the comparative examples**

| | Comparative Example 1 | Comparative Example 2 | Comparative Example 3 | Comparative Example 4 | Comparative Example 5 |
|---|---|---|---|---|---|
| Transparent polyamide type | PA6I/6T-4 | PA6I/6T-5 | PA10I/10T-4 | PA10I/10T-5 | PA6I/6T-1 |
| Transparent polyamide content | 85 | 85 | 85 | 85 | 100 |
| Semi-crystalline polyamide type | PA610 | PA610 | PA610 | PA610 | |
| Semi-crystalline polyamide content | 15 | 15 | 15 | 15 | |
| E1 | 0.6 | 0.6 | 0.6 | 0.6 | 0.6 |
| Additional organosilicon elastomer | | | | | |
| Light-scattering agent | | | | | |
| Antioxidant | 0.2 | 0.2 | 0.2 | 0.2 | 0.2 |
| Light transmittance, % | 57 | 52 | 61 | 63 | 88 |
| Haze, % | 86 | 89 | 85 | 88 | 63 |
| Light transmittance after ethanol soaking, % | 55 | 50 | 60 | 63 | 52 |

It can be seen from Comparative Examples 1 to 4 that, when the molar ratios of repeating units in PA6I/6T and PA10I/10T are not in the ranges specified in the present disclosure, the light transmittance is very low.

It can be seen from Comparative Example 5 that, if the semi-crystalline polyamide is not added, the chemical resistance is poor, and the haze is also low.

**Continued Table 2:**

| | Comparative Example 6 | Comparative Example 7 | Comparative Example 8 | Comparative Example 9 | Comparative Example 10 |
|---|---|---|---|---|---|
| Transparent polyamide type | PA6I/6T-1 | PA6I/6T-1 | PA6I/6T-1 | PA6I/6T-1 | PA6I/6T-1 |
| Transparent polyamide content | 85 | 85 | 72 | 98 | 85 |
| Semi-crystalline polyamide type | PA610 | PA610 | PA610 | PA610 | PA11 |
| Semi-crystalline polyamide content | 15 | 15 | 25 | 2 | 15 |
| E1 | | | 0.5 | 0.5 | 0.6 |
| Additional organosilicon elastomer | 0.6 | | | | |
| Light-scattering agent | | 0.6 | | | |
| Antioxidant | 0.2 | 0.2 | 0.2 | 0.2 | 0.2 |
| Light transmittance, % | 68 | 57 | 67 | 87 | 48 |
| Haze, % | 89 | 92 | 79 | 63 | 89 |
| Light transmittance after ethanol soaking, % | 62 | 43 | 61 | 63 | 40 |

It can be seen from Comparative Example 6 that, even if the additional organosilicon elastomer also has an average particle size of 3 µm, the light transmittance is low. According to Comparative Example 7, the light-scattering agent commonly used in the art greatly reduces the light transmittance and also leads to poor chemical resistance.

According to Comparative Examples 8 and 9, if a proportion of the semi-crystalline polyamide is too large, the light transmittance is low. If the proportion of the semi-crystalline polyamide is too small, the light transmittance is high, but the haze and chemical resistance are also low.

It can be seen from Comparative Example 10 that, although PA11 is also a long-chain polyamide, the light transmittance is low due to high crystallinity of PA11.

## Claims

1. A polyamide composite, comprising the following components in parts by weight: 77.2 parts to 94.8 parts of PAXI/XT, 5 parts to 20 parts of a semi-crystalline polyamide, and 0.2 part to 0.8 part of a powder of organosilicon elastomer comprising a methacryloxy functional group, wherein the semi-crystalline polyamide is at least one selected from the group consisting of PA66, PA610, PA612, PA106, PA1010, and PA1012; and the PAXI/XT is a copolymer of an aliphatic diamine X, isophthalic acid I, and terephthalic acid T, and the aliphatic diamine X is at least one selected from the group consisting of 1,6-hexanediamine and 1,10-decanediamine.

2. The polyamide composite according to claim 1, wherein a diamine X of the PAXI/XT is consistent with a diamine unit of the semi-crystalline polyamide.

3. The polyamide composite according to claim 1, wherein when the PAXI/XT is PA6I/6T, a molar ratio of a 6I unit to a 6T unit is 65:35 to 75:25 and preferably 69:31 to 71:29; and when the PAXI/XT is PA101/10T, a molar ratio of a 10I unit to a 10T unit is 75:25 to 85:15 and preferably 79:21 to 81:19.

4. The polyamide composite according to claim 1, wherein the powder of organosilicon elastomer comprising the methacryloxy functional group has an average particle size of 0.1 µm to 8 µm and preferably 0.1 µm to 3 µm.

5. The polyamide composite according to claim 1, wherein the polyamide composite has a light transmittance of greater than 73% and a haze of greater than 65%.

6. The polyamide composite according to any one of claims 1 to 5, further comprising the following component in parts by weight: 0 part to 2 parts of an additive, wherein the additive is at least one selected from the group consisting of an antioxidant, a lubricant, and an anti-ultraviolet agent.

7. A preparation method of the polyamide composite according to any one of claims 1 to 6, comprising the following steps: thoroughly mixing the components according to proportions, and conducting extrusion and granulation by a twin-screw extruder at a temperature of 200°C to 280°C and a rotational speed of 200 rpm to 400 rpm to produce the polyamide composite.

8. A use of the polyamide composite according to any one of claims 1 to 6 in preparation of a navigation light for a plant protection drone.
